Europäisches Patentamt

European Patent Office

Office européen des brevets

(11) Publication number: 0 667 323 A2

# EUROPEAN PATENT APPLICATION

(21) Application number: 95101783.9

(22) Date of filing: 09.02.95

(51) Int. Cl.6: C04B 35/593, C04B 35/597

(30) Priority: 10.02.94 JP 37630/94

(43) Date of publication of application:
16.08.95 Bulletin 95/33

(84) Designated Contracting States:
DE FR GB

(71) Applicant: SUMITOMO ELECTRIC INDUSTRIES,
LTD.
5-33, Kitahama 4-chome,
Chuo-ku
Osaka-shi,
Osaka 541 (JP)

(72) Inventor: Yoshimura, Masashi, c/o Itami
Works of Sumitomo
Electric Ind. Ltd.,
1-1, Koyakita 1-chome
Itami-shi,
Hyogo (JP)
Inventor: Yamamoto, Takehisa, c/o Itami
Works of Sumitomo
Electric Ind. Ltd.,
1-1, Koyakita 1-chome
Itami-shi,
Hyogo (JP)
Inventor: Nishioka, Takao, c/o Itami Works of
Sumitomo
Electric Ind. Ltd.,
1-1, Koyakita 1-chome
Itami-shi,
Hyogo (JP)
Inventor: Kimura, Atsusuhi, c/o Osaka Works
of Sumitomo
Electric Industries, Ltd.,
1-3, Shimaya 1-chome
Konohana-ku,
Osaka-shi,
Osaka (JP)
Inventor: Yamakawa, Akira, c/o Itami Works of
Sumitomo
Electric Ind. Ltd.,
1-1, Koyakita 1-chome
Itami-shi,
Hyogo (JP)

(74) Representative: Fiener, Josef
Patentanwälte Kahler, Käck, Fiener & Sturm
P.O. Box 12 49
D-87712 Mindelheim (DE)

(54) Silicon nitride sintered body and process for preparing the same.

(57) A silicon nitride sintered body containing silicon nitride and/or sialon in an amount of at least 85% by weight and having a relative density of at least 98%, wherein the silicon nitride and/or sialon consists of particles whose greatest diameters measured on a two-dimensional section of the sintered body are each less than 5 $\mu$m, and silicon nitride and/or sialon particles whose greatest diameters mentioned above are each 0.7 $\mu$m or less account for 40 to 70% of the total cross sectional area of all the particles. Fine particles of compound(s) mainly composed of nitride(s) of element(s) of Group 4A, each having a size of 500 nm or less may be dispersed in the above sintered body of silicon nitride. The silicon nitride sintered body is produced by mixing a specific material powders, molding the mixture, subjecting the molded body to primary and secondary sinterings under the specific conditions so as to attain a relative density of at least 98% in the resultant sintered body.

EP 0 667 323 A2

# F I G . I

## BACKGROUND OF THE INVENTION

### 1. Field of the Invention

The present invention relates to a silicon nitride sintered body which not only has excellent mechanical strength whose dispersion is small at both ordinary and high temperatures but also is excellent in productivity and production cost, and further relates to a process for producing the silicon nitride sintered body.

### 2. Description of the Prior Art

In recent years, the use of ceramics known as materials having excellent wear resistance and slidability is on trial with a view toward reducing the weight of automobile engines or the like and toward improving the performance thereof. Among various ceramics, silicon nitride ($Si_3N_4$) has attracted especial attention and numerous investigations have been made thereon, because it is a material having well-balanced properties with respect to strength, fracture toughness, corrosion resistance, thermal shock resistance, oxidation resistance, etc.

For the employment of a sintered body of silicon nitride in parts whose material is required to have high reliability, such as those of automobile engines, it is requisite not only to further improve its mechanical strength but also to minimize the dispersion thereof, and further to meet the market demands with respect to the productivity and cost as well.

In the above situation, various processes have been attempted for obtaining a stable silicon nitride sintered body, having high strength. The conventional theory applicable to structural materials is as expressed by the following numerical formula 1 relating to fracture mechanics proposed by Griffith, in accordance with which not only has the fracture toughness of a material been improved but also the development of a material having high strength and high reliability has been promoted.

$$\sigma = 1/Y \times E \times K_{IC}/c^{1/2} \qquad \text{[Numerical formula 1]}$$

wherein $\sigma$ represents rupture strength, Y shape factor, E Young's modulus, $K_{IC}$ critical stress amplification factor and c dimension of rupture source.

For example, Japanese Patent Laid-Open No. 265173/1987 discloses a sintered body based on $Si_3N_4$ whose fracture toughness has been improved by dispersing whiskers as foreign constituents in $Si_3N_4$. However, although this $Si_3N_4$ material has a high fracture toughness, there has been a limit in the improvement of the strength thereof, because the particle size of particulate $Si_3N_4$ or dispersed whisker is so large that crystal grain is likely to become a rupture source, and because the amount of a second phase is as large as 5 to 20% by volume, thereby leading to occurrence of microcracks attributed to the aggregation of the second phase or the difference in thermal expansion coefficient between $Si_3N_4$ and the second phase.

Further, Japanese Patent Laid-Open No. 202059/1992 discloses an $Si_3N_4$ sintered body whose toughness and strength have been improved by dispersing foreign particles each having a diameter of 1 to 500 nm in $Si_3N_4$ or sialon having a minor axis of 0.05 to 3 $\mu$m and an aspect ratio of 3 to 20. However, for this sintered body as well, the Weibull coefficient being an index of the dispersion of strength is never high because of, for example, the aggregations of coarse $Si_3N_4$ particles and of the dispersed foreign particles, so that there has been a limit in obtaining a stable and highly strong material.

Still further, Japanese Patent Publication No. 66901/1993 describes a highly tough $Si_3N_4$ sintered body which is composed of $Si_3N_4$ or sialon particles consisting of 15 to 35% by volume, based on the sintered body, of columnar particles each having a minor axis of at least 0.8 $\mu$m and an aspect ratio of at least 4 and the balance of columnar particles each having a minor axis of less than 0.8 $\mu$m and an aspect ratio of less than 4, together with a grain boundary phase. However, although this sintered body has an improved toughness, the strength thereof is about 120 kg/mm$^2$ at the best, and there has been a limit in the improvement of the strength because of the presence of the large columnar particles each having a minor axis of at least 0.8 $\mu$m and an aspect ratio of at least 4.

As apparent from the above, irrespective of the numerous trials directed toward the improvement of the strength and toughness of the silicon nitride sintered body, any of the hitherto proposed sintered bodies of silicon nitride cannot be stated as being a stable material having high strength and fracture toughness, so that their use in automobile engine parts whose weight reduction is on demand, such as a piston valve, a piston pin, a piston ring and other valve train parts, has involved problems with respect to safety, reliability, etc.

## SUMMARY OF THE INVENTION

In view of the above situation of the prior art, objects of the present invention are to provide a silicon nitride sintered body having mechanical properties satisfactory for use in automobile engine parts or the like, especially having markedly improved strength free of dispersion, and to provide a process for producing a silicon nitride sintered body which is advantageous in productivity and production cost.

For attaining the above objects, the present invention provides a silicon nitride sintered body which contains silicon nitride and/or sialon in an amount of at least 85% by weight and which has a relative density of at least 98%, wherein the silicon nitride and/or sialon consists of particles whose greatest diameters measured on a two-dimensional section of the sintered body are each less than 5 $\mu$m, and silicon nitride and/or sialon particles whose greatest diameters mentioned above are each 0.7 $\mu$m or less account for 40 to 70% of the total cross sectional area of all the particles. Preferably, fine particles of a compound or compounds mainly composed of a nitride or nitrides of at least one element belonging to Group 4A, each having a size of 500 nm or less are dispersed in the silicon nitride sintered body according to the present invention.

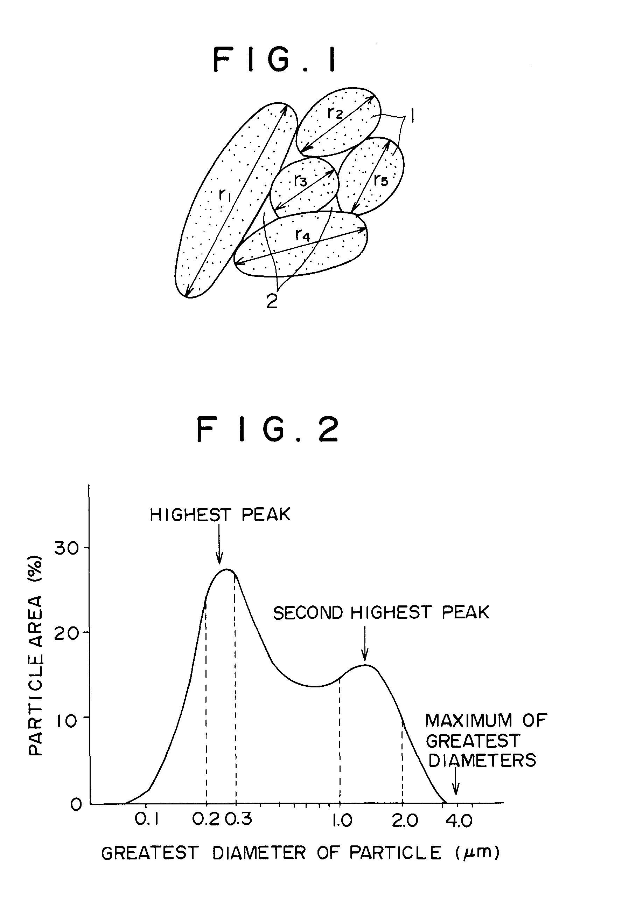

In the present invention, the terminology "greatest diameter" means a diameter which is the longest of diameters (lengths) of each $Si_3N_4$ or sialon particle 1 observed on a two-dimensional section of the sintered body, for example, $r_1$, $r_2$, $r_3$, $r_4$, $r_5$, as illustrated in Fig. 1. The area exhibited by each particle 1 on the two-dimensional section is referred to as "particle area", and the total of the cross sectional areas (excluding the area of a grain boundary phase 2) of all the particles 1 observed in the visual field is referred to as "total particle area". When the foreign material particles of the compound(s) of Group 4A elements are dispersed in the sintered body, the particle area of the silicon nitride and/or sialon having a greatest diameter of 0.7 $\mu$m or less is 40 to 70% with respect to the combined cross sectional area of all the particles of silicon nitride and/or sialon and the dispersed foreign material compound particles. Throughout the specification and claims, the proportion of the particle area of silicon nitride and/or sialon particles having a specific greatest diameter is specified as above unless otherwise indicated.

Moreover, the process for producing a silicon nitride sintered body according to the present invention comprises mixing a first sintering aid composed of an oxide or oxides of at least one rare earth element and a second sintering aid composed of an oxide or oxides containing Mg and Al into a powdery silicon nitride having an average particle size not greater than 0.7 $\mu$m and an $\alpha$ ratio of at least 85% to thereby form a powdery mixture containing silicon nitride in an amount of at least 85% by weight, molding the mixture, subjecting the mixture to primary sintering in an inert gas atmosphere and at 1300 to 1550°C, preferably 1400 to 1500°C so as to attain a relative density of at least 95%, and then subjecting the primary sintered body to secondary sintering in an inert gas atmosphere of at least 5 atm and at 1550 to 1700°C, preferably 1600 to 1650°C so as to attain a relative density of at least 98%.

## BRIEF DESCRIPTION OF THE DRAWINGS

Fig. 1 is a schematic view of a two-dimensional section of a sintered body, given for explaining the method of determining the greatest diameter and particle area of each of particles of, for example, $Si_3N_4$ forming the sintered body.

Fig. 2 is a graph in which the proportion of the particle area defined by the particles having the same greatest diameters on the two-dimensional section of a sintered body is indicated versus each of the greatest diameters of the particles.

## DETAILED DESCRIPTION OF THE PREFERRED EMBODIMENTS

In the present invention, the texture of silicon nitride and/or sialon particles forming the sintered body is controlled on the basis of the greatest diameters of the particles, so that it is possible to obtain a novel silicon nitride sintered body having excellent mechanical properties, especially having an excellent strength not only at ordinary temperature but also at high temperatures, with an extremely small strength dispersion. Such a superior sintered body has not been obtained in the prior art

The silicon nitride sintered body according to the present invention should basically contain silicon nitride ($Si_3N_4$) and/or sialon (Si-Al-O-N compound being a solid solution obtained by incorporating Al and 0 in $Si_3N_4$) in an amount of at least 85% by weight, preferably at least 90% by weight, and should have a relative density of at least 98%, preferably at least 99%. When the content of $Si_3N_4$ and/or sialon is less than 85% by weight, the strength of the sintered body is lowered and the strength dispersion becomes marked because of the aggregation of, for example, a sintering aid whose amount has been relatively increased and because of the occurrence of coarse grains. Further, when the relative density of the sintered body is less than 98%, pores would occur inside the sintered body, thereby bringing about a sharp strength lowering and a marked strength dispersion.

Although the $Si_3N_4$ and sialon particles forming the silicon nitride sintered body may be either columnar particles or equi-axed particles, it is preferred that columnar particles be employed. The maximum of the greatest diameters of the particles as measured on the two-dimensional section of the sintered body (maximum greatest diameter) should be less than 5 $\mu$m, which is preferably less than 4 $\mu$m. When particles whose greatest diameters are 5 $\mu$m or more are present in the sintered body, strength improvement cannot be anticipated and also strength dispersion becomes large.

When silicon nitride and/or sialon particles whose greatest diameters are each 0.7 $\mu$m or less account for less than 40% of the total particle area, the sintered body would have a low strength. On the other hand, when the above particles account for more than 70% of the total particle area, the strength dispersion would be large. Therefore, in the silicon nitride sintered body according to the present invention, particles whose greatest diameter measured on the two-dimensional section are each 0.7 $\mu$m or less account for 40 to 70%, preferably 60 to 70% of the total particle area.

By virtue of the above fine particle composition, the silicon nitride sintered body according to the present invention exhibits a superior strength as high as at least 180 kg/mm$^2$ on the average in terms of three-point flexural strength as measured in accordance with Japanese Industrial Standard R 1601, and also the strength dispersion is extremely small. Moreover, the fracture toughness of the sintered body as measured by the SEPB method in accordance with Japanese Industrial Standard R 1607 is at least 6 MPa$\bullet$m$^{1/2}$ on the average, and further the sintered body has high impact resistance and excellent fatigue properties.

Referring to Fig. 2, the strength of the silicon nitride sintered body according to the present invention can further be improved and the strength dispersion can be rendered extremely small by finely and uniformly controlling the texture of the sintered body so as to cause the highest peak (i.e., greatest diameters of particles accounting for the largest proportion of the total particle area on the two-dimensional section of the sintered body) and the second highest peak (i.e., greatest diameters of particles accounting for the second largest proportion of the total particle area) to range from 0.2 to 0.4 $\mu$m and from 1 to 2 $\mu$m, respectively, on the graph in which the proportion of the particle area defined by the particles having the same greatest diameters on the two-dimensional section of the sintered body is indicated versus each of the greatest diameters of the particles.

Besides the requirement that the maximum of the greatest diameters of the particles be less than 5 $\mu$m, it is preferred that particles whose greatest diameters are each at least 3 $\mu$m account for 5% or less preferably 3% or less, still preferably 1% or less. The reason is that the decrease of the proportion of the above particles whose greatest diameters are each at least 3 $\mu$m promotes the uniformity of the texture of the sintered body, improves the strength of the sintered body and reduces the strength dispersion.

With respect to the precipitated phases of $Si_3N_4$ and/or sialon of the silicon nitride sintered body, it is preferred that the ratio of precipitated $\alpha$ phase ($\alpha$-$Si_3N_4$ and $\alpha$'-sialon) to precipitated $\beta$ phase ($\beta$-$Si_3N_4$ and $\beta$'-sialon), viz., $\alpha$ : $\beta$ (%), be in the range of 1:99 to 40:60. This precipitation ratio is measured by X-ray diffractometry. $\alpha$-$Si_3N_4$ and $\alpha$'-sialon are determined from the X-ray diffraction peak heights at (102) and (201), and $\beta$-$Si_3N_4$ and $\beta$'-sialon from those at (101) and (210). The controlling of the ratio of $\alpha$ : $\beta$ within the above range stabilizes the texture of the sintered body, reduces the dispersion and stably imparts the required strength.

The process for producing a silicon nitride sintered body according to the present invention will be described below. First, a powdery silicon nitride having an average particle size not greater than 0.7 $\mu$m, preferably not greater than 0.5 $\mu$m and an $\alpha$ ratio ($\alpha$-$Si_3N_4$ content) of at least 85% must be provided for obtaining the above texture of the sintered body. As long as this requirement is satisfied, the powdery $Si_3N_4$ may be produced by any of the known processes such as the direct nitriding process and the powder synthesis process (e.g., imide decomposition process).

Sintering aids, i.e., a first sintering aid composed of an oxide or oxides of at least one rare earth element such as Y, Yb, Er and Nd and a second sintering aid composed of an oxide or oxides containing Mg and Al such as $MgAl_2O_4$ and $MgO$ + $Al_2O_3$ are mixed into the above powdery $Si_3N_4$. The total amount of the first sintering aid and the second sintering aid is preferably in the range of 5 to 15% by weight. Thus, the powdery $Si_3N_4$ is mixed in an amount of at least 85% by weight, preferably at least 90% by weight, as mentioned above.

When the total amount of the sintering aids is less than 5% by weight, the sintering is not satisfactorily promoted, so that a temperature increase beyond necessity must be effected. Thus, not only is the productivity lowered but also it is difficult to obtain the required fine texture. On the other hand, when the total amount of the sintering aids exceeds 15% by weight, defects are likely to occur because of the aggregation of the sintering aids, etc. and coarse grains are likely to be formed, so that strength lowering and strength dispersion result.

The powdery mixture of the $Si_3N_4$ and sintering aids is molded, and the molded body is subjected to sintering in an inert gas atmosphere and at 1300 to 1520°C, preferably 1400 to 1500°C so as to attain a relative density of at least 95%. Thereafter, a second sintering of the primary sintered body is conducted in an inert gas atmosphere of at least 5 atm and at 1550 to 1700°C, preferably 1600 to 1650°C so as to attain a relative density of at least 98%. Nitrogen gas is used as a preferred inert gas.

Under the above sintering conditions, not only is a dense and fine sintered body texture obtained but also the desired ratio of precipitated $\alpha$ phase to precipitated $\beta$ phase is obtained. In particular, the sintering temperature can be lower than that employed for the conventional sintered body based on $Si_3N_4$, which not only helps to form a fine texture while inhibiting the growth of coarse grains but also contributes toward productivity improvement and cutback of production cost.

A compound or compounds containing at least one Group 4A element, such as Ti, Hf and Zr, may be added to the powdery $Si_3N_4$ as a preferred means for further stabilizing the fine texture of the silicon nitride sintered body according to the present invention. These compounds are preferably an oxide, a nitride or an organometallic compound. An oxide such as $TiO_2$, $HfO_2$ and $ZrO_2$ or mixture thereof is especially preferred from the viewpoint of sinterability improvement and low price of a commercially available fine particle product.

The above compound is present in the sintered body as fine particles of a compound mainly composed of nitride(s) of at least one Group 4A element, which are dispersed with a size of 500 nm or less, preferably 10 to 200 nm in the particles of $Si_3N_4$ and/or sialon and/or the grain boundary phase. These fine particles of the compound(s) would become nuclei for phase transformation of the $Si_3N_4$ present in the particles and promote uniform nucleation. Further, the fine particles have an effect of inhibiting the growth of the $Si_3N_4$ present in the grain boundary. Accordingly, a fine sintered body texture could be stably obtained.

The above compound(s) of Group 4A elements should be added so that the amount is 0.1 to 2.0% by weight, preferably 0.5 to 1.5% by weight, in terms of oxide, based on the entire weight of the resultant silicon nitride sintered body. The reason is that, when the amount of the addition is less than 0.1% by weight, the desired effect of the addition cannot be obtained, and that, when the amount of the addition exceeds 2.0% by weight, the compound(s) mainly composed of nitride(s) of Group 4A element(s) is (are) likely to aggregate to thereby form defects, so that uniform texture cannot be obtained to thereby cause the sintered body to suffer from strength lowering and increased strength dispersion.

Example 1

A first sintering aid composed of an oxide of rare earth element and a second sintering aid composed of $MgO \cdot Al_2O_3$ (atomic ratio of Mg : Al = 2 : 1) were added to powdery $Si_3N_4$ having an average particle size of 0.7 $\mu$m, which had been measured with the use of a particle size distribution apparatus, and an $\alpha$ ratio of 90% , and further powdery $TiO_2$ as an oxide of a Group 4A element was added thereto according to necessity to thereby obtain a composition shown in Table 1. Each of the thus obtained compositions was blended by means of a ball mill for 48 hr.

Table 1

| Sample | Powdery $Si_3N_4$ (% by weight) | Oxide of Rare Earth Element | | $MgO \cdot Al_2O_3$ (% by weight) | Powdery $TiO_2$ (% by weight) |
|---|---|---|---|---|---|
| | | Kind | (% by weight) | | |
| 1 | 90.5 | $Y_2O_3$ | 5 | 4 | 0.5 |
| 2 | 85 | $Yb_2O_3$ | 8 | 5 | 2 |
| 3 | 92 | $Y_2O_3$ | 3 | 4 | 1 |
| 4 | 80 | $Y_2O_3$ | 10 | 9 | 1 |
| 5 | 86 | $Y_2O_3$ | 5 | 4 | 5 |
| 6 | 95 | $Y_2O_3$ | 3 | 1 | 1 |
| 7 | 91 | $Y_2O_3$ | 5 | 4 | 0 |

Each of the resultant powdery mixtures was molded, and subjected to primary and secondary sinterings in a nitrogen gas atmosphere under the conditions specified in Table 2, thereby obtaining a sintered body of $Si_3N_4$.

Table 2

| Sample | Primary Sintering Conditions | | | Secondary Sintering Conditions | | |
|---|---|---|---|---|---|---|
| | Temperature (°C) | Time (h) | Relative Density (%) | Temperature (°C) | Time (h) | Pressure (atm) |
| 1-1 | 1500 | 4 | 98.0 | 1650 | 1 | 100 |
| 1-2 | 1500 | 4 | 98.0 | 1750 | 1 | 100 |
| 1-3 | 1420 | 4 | 95.0 | 1650 | 1 | 1000 |
| 2-1 | 1500 | 4 | 99.0 | 1650 | 1 | 10 |
| 2-2 | 1500 | 4 | 99.0 | 1500 | 1 | 100 |
| 3 | 1500 | 4 | 97.0 | 1670 | 1 | 1000 |
| 4 | 1500 | 4 | 98.0 | 1650 | 1 | 1000 |
| 5 | 1550 | 4 | 96.5 | 1650 | 1 | 1000 |
| 6 | 1550 | 4 | 92.0 | 1650 | 1 | 1000 |
| 7 | 1500 | 4 | 98.0 | 1680 | 1 | 1000 |

In order to observe the texture of each of the thus obtained $Si_3N_4$ sintered bodies, part of a sample was finished to exhibit Ra = 0.02 $\mu$m, immersed in an aqueous solution of HCl 50% + $H_2O_2$ 25%, and heated at 60°C for 15 min. Then, the sample was taken out from the aqueous solution, washed well, and irradiated with Ar neutrons by the use of the FAB (Fast-Atom-Bombardment) apparatus manufactured by IONTECH to effect etching at 4-5 kV and 2 mA (tilt angle of 60°) for 10 min.

A 10 x 10 $\mu$m region of the thus obtained two-dimensional section of the sintered body was observed at a magnification of 15,000 by the use of a scanning electron microscope. The greatest diameter and particle area of each particle of $Si_3N_4$ and/or sialon were measured to thereby determine the proportion of the area defined by particles of $Si_3N_4$ and/or sialon whose greatest diameters are each 0.7 $\mu$m or less to the total particle area, the proportion of the area defined by particles whose greatest diameters are each at least 3 $\mu$m to the total particle area and the maximum of the greatest diameters of the particles, for each of the samples. Further, the highest peak (i.e., greatest diameters of particles accounting for the largest proportion of the total particle area) and the second highest peak (i.e., greatest diameters of particles accounting for the second largest proportion of the total particle area) were determined on a graph in which the proportion of the particle area defined by the particles having the same greatest diameters is indicated versus each of the greatest diameters of the particles. Still further, the greatest particle size of the Ti compound dispersed in the sintered body was measured. The results are shown in Table 3.

Table 3

| Sample | Proportion of Area of Particles of 0.7 μm or less (%) | Highest Peak (μm) | Second Highest Peak (μm) | Proportion of Area of Particles of at least 3 μm (%) | Maximum of Greatest Diameters of Particles (μm) | Greatest Particle Size of Ti Compound (nm) |
|---|---|---|---|---|---|---|
| 1-1 | 68 | 0.24 | 1.2 | 0.5 | 3.4 | 100 |
| 1-2* | 20 | — | 3.5 | 15.0 | 6.0 | 100 |
| 1-3 | 62 | 0.28 | 1.5 | 2.5 | 4.0 | 100 |
| 2-1 | 43 | 0.36 | 1.8 | 3.0 | 4.2 | 200 |
| 2-2* | 80 | 0.22 | — | 0 | 2.0 | 200 |
| 3 | 60 | 0.28 | 1.4 | 2.1 | 3.9 | 100 |
| 4* | 50 | 0.30 | 2.0 | 7.0 | 6.0 | 100 |
| 5* | 40 | 0.25 | 1.5 | 4.0 | 3.5 | 600 |
| 6* | 30 | 0.35 | 3.0 | 8.0 | 5.0 | 100 |
| 7 | 40 | 0.40 | 2.0 | 4.8 | 4.9 | — |

(Note) The mark * appearing in the above Table indicates that the sample is a Comparative Example.

With respect to each of the above $Si_3N_4$ sintered bodies, the relative density was determined and the ratio of precipitated $\alpha$ phase to precipitated $\beta$ phase (%) was measured by X-ray diffractometry. For each of the samples, 15 test specimens were prepared for the flexural strength test in accordance with Japanese Industrial Standard R 1601, and the three-point flexural strengths thereof were measured to obtain the average three-point flexural strength. Further, the Weibull coefficient being an index of the dispersion of strength was calculated. Still further, the fracture toughness values $K_{IC}$ of the sintered bodies were measured by the SEPB method in accordance with Japanese Industrial Standard R 1607 to obtain the average $K_{IC}$ values. The results are shown in Table 4.

Table 4

| Sample | Relative Density (%) | $\alpha : \beta$ (%) | Flexural Strength (kg/mm$^2$) | Weibull coefficient | Fracture Toughness (MPa$\cdot$m$^{1/2}$) |
|---|---|---|---|---|---|
| 1-1 | 99.9 | 20:80 | 240 | 24 | 7.0 |
| 1-2* | 99.9 | 0:100 | 150 | 10 | 6.7 |
| 1-3 | 99.9 | 25:75 | 190 | 20 | 6.3 |
| 2-1 | 99.9 | 15:85 | 220 | 26 | 7.2 |
| 2-2* | 99.8 | 50:50 | 120 | 9 | 5.0 |
| 3 | 99.9 | 27:73 | 210 | 22 | 6.5 |
| 4* | 99.9 | 9:91 | 150 | 8 | 5.5 |
| 5* | 98.0 | 11:89 | 130 | 10 | 5.9 |
| 6* | 95.0 | 0:100 | 90 | 8 | 5.2 |
| 7 | 99.8 | 10:90 | 180 | 17 | 6.1 |

(Note) The mark * appearing in the above Table indicates that the sample is a Comparative Example.

As apparent from the above results, all the samples falling within the scope of the present invention exhibit high strength and small strength dispersion (large Weibull coefficient). In contrast, the sample 1-2 has a maximum of greatest diameter exceeding 5 $\mu$m, the sample 2-2 has a particle area defined by particles whose greatest diameters are each 0.7 $\mu$m or less which falls outside the range of 40 to 70%, the sample 4 has not only a maximum of greatest diameter exceeding 5 $\mu$m but also an $Si_3N_4$ content of less than 85% by weight, the sample 5 has a $TiO_2$ content exceeding 2% by weight and the sample 6 has a relative density of sintered body of less than 98%, so that all of these samples have poor strength and large strength dispersion.

Example 2

In the atmosphere, the strengths (three-point flexural strengths) at a given high temperature being in the range of 600 to 1200°C were measured of 15 flexural strength test specimens prepared from the above sample 1-1 of $Si_3N_4$-based sintered body of Example 1, and the average value was obtained for each measuring temperature. The results are shown in Table 5. In the high-temperature strength measurement, the temperature was raised at a rate of 10°C/min, and the test specimens were held at the measuring temperature for 10 min before their strengths were measured.

Table 5

| Test Temperature (°C) | Strength (kg/mm$^2$) |
|---|---|
| 600 | 235 |
| 800 | 220 |
| 1000 | 180 |
| 1200 | 140 |

The above results demonstrate that the $Si_3N_4$ sintered body according to the present invention is also excellent in high-temperature strength, ensuring applicability to valve train parts of automobile engines.

The present invention provides a silicon nitride sintered body not only having excellent mechanical properties, especially having markedly improved strength whose dispersion is extremely small, but also very effectively producible at a lowered production cost. This silicon nitride sintered body is suitable for use in automobile engine parts whose weight reduction is on demand, such as a piston valve, a piston pin, a piston ring and other valve train parts.

**Claims**

1. A silicon nitride sintered body containing silicon nitride and/or sialon in an amount of at least 85% by weight and having a relative density of at least 98%, wherein the silicon nitride and/or sialon consists of particles whose greatest diameters measured on a two-dimensional section of the sintered body are each less than 5 $\mu$m, and silicon nitride and/or sialon particles whose greatest diameters mentioned above are each 0.7 $\mu$m or less account for 40 to 70% of the total particle area of all the particles.

2. A silicon nitride sintered body comprising silicon nitride and/or sialon in an amount of at least 85% by weight and having a relative density of at least 98%, wherein the silicon nitride and/or sialon consists of particles whose greatest diameters measured on a two-dimensional section of the sintered body are each less than 5 $\mu$m, silicon nitride and/or sialon particles whose greatest diameters mentioned above are each 0.7 $\mu$m or less account for 40 to 70% of the total particle area of all the particles, and fine particles of a compound or compounds mainly composed of at least one nitride of elements belonging to Group 4A, each having a size of 500 nm or less are dispersed in the sintered body.

3. The silicon nitride sintered body according to claim 1 or 2, wherein the greatest diameters of particles accounting for the largest proportion of the total particle area range from 0.2 to 0.4 $\mu$m, and the greatest diameters of particles accounting for the second largest proportion of the total particle area range from 1 to 2 $\mu$m.

4. The silicon nitride sintered body according to claim 1 or 2, wherein particles whose greatest diameters are each at least 3 $\mu$m account for 5% or less of the total particle area.

5. The silicon nitride sintered body according to claim 1 or 2, wherein the silicon nitride and/or sialon has $\alpha$ and $\beta$ phases precipitated whose ratio [$\alpha : \beta$ (%)] is in the range of 1:99 to 40:60.

6. The silicon nitride sintered body according to claim 2, wherein the proportion of the dispersed fine particles to the whole of the sintered body is in the range of 0.1 to 2.0% by weight in terms of oxide.

7. The silicon nitride sintered body according to any of claims 1 to 6, wherein its average three-point flexural strength is at least 180 kg/mm$^2$ as measured in accordance with Japanese Industrial Standard R 1601.

8. A process for producing a silicon nitride sintered body, comprising mixing a first sintering aid composed of at least one oxide of rare earth elements and a second sintering aid composed of at least one oxide containing Mg and Al into a powdery silicon nitride having an average particle size not greater than 0.7 $\mu$m and an $\alpha$ ratio of at least 85% to thereby provide a powdery mixture containing silicon nitride in an amount of at least 85% by weight, molding the mixture, subjecting the molded body to primary sintering in an inert gas atmosphere and at 1300 to 1520°C so as to attain a relative density of at least 95%, and then subjecting the primary sintered body to secondary sintering in an inert gas atmosphere of at least 5 atm and at 1550 to 1700°C so as to attain a relative density of at least 98%.

9. The process for producing a silicon nitride sintered body according to claim 8, wherein 0.1 to 2.0% by weight, in terms of oxide, of a compound or compounds containing at least one element belonging to Group 4A is further mixed into the powdery silicon nitride.

EP 0 667 323 A2

# F I G. I

# F I G. 2

11